# EUROPÄISCHE PATENTANMELDUNG

(11) **EP 3 147 120 A1**
(43) Veröffentlichungstag der Anmeldung: **29.03.2017**
(21) Anmeldenummer: 15186931.0
(22) Anmeldetag: 25.09.2015
(51) Int. Cl.: B32B 5/02, B32B 7/12, B32B 27/02, B32B 27/08, B32B 27/12, B32B 27/28, B32B 27/32

(54) **VERBUNDMATERIAL FÜR DIE HERSTELLUNG VON FORMPRESSTEILEN, FORMPRESSTEIL SOWIE VERFAHREN ZUR HERSTELLUNG DES FORMPRESSTEILS**

(71) Anmelder: Mondi Gronau GmbH, 48599 Gronau (DE)
(72) Erfinder: Boccuto, Domenico, 48703 Stadtlohn (DE)
(74) Vertreter: Lorenz, Bernd Ingo Thaddeus

(57) **Zusammenfassung**

Die Erfindung betrifft ein Verbundmaterial für die Herstellung von Formpressteilen mit einem nicht-thermoplastische Fasern, insbesondere Naturfasern (3) und thermoplastisches Polymer, insbesondere thermoplastische Fasern (4) enthaltenden Träger (1) und mit einer Dekorfolie (2), die mit einer ersten Seite auf dem Träger (1) angeordnet ist und mit einer zweiten Seite eine Oberfläche des Verbundmaterials bildet. Erfindungsgemäß weist die Dekorfolie (2) an der zweiten Seite eine Deckschicht (5) mit Ionomer als Hauptbestandteil auf. Die Erfindung betrifft des Weiteren ein Formpressteil hergestellt aus dem beschriebenen Verbundmaterial sowie ein Verfahren zur Herstellung des Formpressteils.

## Beschreibung

Die Erfindung betrifft ein Verbundmaterial für die Herstellung von Formpressteilen mit einem nicht-thermoplastische Fasern und thermoplastisches Polymer enthaltenen Träger und mit einer Dekorfolie, die mit einer ersten Seite auf dem Träger angeordnet ist und mit einer zweiten Seite eine Oberfläche des Verbundmaterials bildet. Gegenstand der Erfindung sind des Weiteren auch ein aus diesem Verbundmaterial hergestelltes Formpressteil sowie ein Verfahren zur Herstellung des Formpressteils.

Bei dem Formpressteil kann es sich beispielsweise um ein Gehäuse oder vorzugsweise um ein Interieurbauteil für die Innenverkleidung von Fahrzeugen, insbesondere Kraftfahrzeugen handeln. Interieurbauteile für den Innenraum von Kraftfahrzeugen werden in der Praxis überwiegend aus synthetisch hergestellten Rohstoffen, beispielsweise TPO, PVC, PUR, PC, PMMA oder ABS hergestellt, wobei diese thermoplastischen Polymere direkt in einem Spritzgussverfahren zu dem Interieurbauteil geformt werden. Darüber hinaus ist es auch bekannt, eine Deckschicht, beispielsweise eine Folie mit thermoplastischem Kunststoff zu hinterspritzen, um ein Formteil zu bilden.

Für die Herstellung von Interieurbauteilen oder anderen Trägerbauteilen kommt neben dem Spritzgießen auch die Herstellung als Formpressteil in Betracht, wobei ein Träger aus Naturfasern und thermoplastischen Fasern unter Einwirkung von Druck und Temperatur in die gewünschte Form gebracht und nachfolgend mit einer Dekorfolie versehen wird. Ein weiteres Kaschieren führt dazu, dass der Herstellungsaufwand erhöht ist. Die Anordnung der Dekorfolie ist jedoch notwendig, um trotz des Anteils an Naturfasern in dem Formpressteil ein hochwertiges Erscheinungsbild sowie eine langfristige Kratz- und Abriebsbeständigkeit zu erreichen. Die Dicke der nachträglich aufkaschierten Dekorfolie liegt typischerweise zwischen 400 µm und 2000 µm, wobei das Aufbringen der verhältnismäßig dicken Folie auch aus ökologischer Sicht nachteilig ist.

In der DE 10 2009 041 683 A1 wird ein Bauteil beschrieben, das als Innenverkleidungsteil für ein Kraftfahrzeug eingesetzt wird. Das Bauteil weist einen Träger auf, der auf Basis von Fasermaterial hergestellt wird. Dabei wird zunächst eine Mischung aus Naturfasern und Polymerfasern hergestellt. Die Fasern werden mittels Formpressen zu dem Trägerteil geformt. Danach wird das Trägerteil mit einer dicken Dekorfolie auf der Basis von Polyvinylchlorid oder thermoplastischem Olefin (TPO) kaschiert.

Ein gattungsgemäßes Verbundmaterial ist aus der EP 2 719 530 A1 bekannt. Es wird ein Formpressteil mit einem aus einer Fasermischung aus Naturfasern und Polymerfasern bestehenden Trägers und mit einer auf den Träger angeordneten polymeren Deckschicht offenbart, wobei die Deckschicht aus einer Folie besteht, die eine der Faserfläche des Trägers zugewandte Polyolefinschicht und mindestens eine mit dieser coextrudierte Barriereschicht aufweist und wobei die Barriereschicht der Folie einen höheren Schmelzpunkt und/oder einen niedrigeren Schmelzflussindex aufweist als die Polyolefinschicht. Durch die Barriereschicht wird erreicht, dass auch bei der Umformung des Verbundmaterials unter Druck und Temperatur zur Bildung des Formpressteils die Naturfasern nicht durch die Barriereschicht gelangen und somit von einer geschlossenen Polymerschicht geschützt sind. Als kratzfeste Deckschicht können beispielsweise Polyamide und thermoplastische Polyurethane mit einer Schichtdicke von bis zu 100 µm verwendet werden, welche durch eine Haftvermittlerschicht an die Polyolefinschicht anschließt.

Bei einer kratzfesten Deckschicht auf der Basis von Polyamid resultiert eine glatte, glänzende Oberfläche.

Durch die beschriebene Barrierewirkung werden die Naturfasern von der Deckschicht ferngehalten. Die Verbundhaftung ist jedoch je nach Umformgrad und Einsatzzweck des Formpressteils noch verbesserungsbedürftig.

Vor diesem Hintergrund liegt der vorliegenden Erfindung die Aufgabe zugrunde, ein Verbundmaterial für die Herstellung eines Formpressteils sowie ein Formpressteil selbst anzugeben, bei dem sich bessere Oberflächeneigenschaften und eine verbesserte Verbundhaftung ergeben. Die Erfindung betrifft des Weiteren ein Verfahren zur Herstellung des Formpressteils.

Gegenstand der Erfindung sowie Lösung der Aufgabe sind ein Verbundmaterial gemäß Patentanspruch 1, ein Formpressteil gemäß Patentanspruch 11 sowie ein Verfahren zur Herstellung des Formpressteils gemäß Patentanspruch 12.

Ausgehend von einem Verbundmaterial mit den eingangs beschriebenen Merkmalen ist also vorgesehen, dass die Dekorfolie an der zweiten Seite eine Deckschicht mit lonomer als Hauptbestandteil aufweist. Entsprechend ist in der Deckschicht das lonomer mit einem Anteil von zumindest 50 Gew.-% vorhanden.

Ionomere zeichnen sich durch hervorragende mechanische Eigenschaften aus, so dass die Deckschicht kratzfest ist. Gleichzeitig wird aber auch im Vergleich zu bekannten Deckschichten aus Polyamid eine deutliche mattere und rauere Oberfläche bereitgestellt, was zu einer angenehmeren Haptik und einem hochwertigen Erscheinungsbild führt. Insbesondere können bei einem Heißkaschieren der Dekorfolie mit dem Träger und/oder einem nachfolgenden Umformen zum Bilden des Formpressteils die nicht-thermoplastischen Fasern auch in die Deckschicht auf der Basis von lonomer gelangen und so zu einer erhöhten Rauigkeit beitragen. Schließlich ergibt sich durch die Einbettung der nicht-thermoplastischen Fasern in der Deckschicht auch langfristig eine optimale Verbundhaftung.

Obwohl gemäß der vorliegenden Erfindung die nicht-thermoplastischen Fasern bis an die Oberfläche des gebildeten Formpressteils heranreichen, kann überraschenderweise eine sehr hohe Widerstandsfähigkeit erreicht werden.

Bei Dekorschichten auf der Basis einfacher Polyolefine gemäß dem Stand der Technik wird beobachtet, dass nicht-thermoplastische Fasern in der Deckschicht Schwachstellen darstellen, welche die Widerstandsfähigkeit des Pressformteils deutlich reduzieren, weshalb die nicht-thermoplastischen Fasern gemäß der EP 2 719 530 A1 durch eine Barriereschicht von der entsprechenden Oberfläche ferngehalten werden.

Die vorliegende Erfindung macht sich dagegen zu Nutze, dass lonomere nicht nur einer Oberfläche eine hohe Kratzfestigkeit verleihen, sondern auch eine sehr gute Haftung zu Naturfasern aufweisen, so dass die Übergänge zwischen dem lonomer und den einzelnen Naturfasern keine Schwachstellen bilden.

Die Dicke der Deckschicht beträgt üblicherweise zwischen 10 µm und 100 µm, vorzugsweise zwischen 20 µm und 80 µm.

Zur weiteren Verbesserung der Oberflächeneigenschaften kann die Dekorfolie in zumindest einer Schicht, insbesondere der Deckschicht durch die Zugabe von Additiven modifiziert werden. Neben Farbpigmenten können zur Einstellung des Glanzgrades anorganische oder organische Mattierungsmittel zugegeben werden. Eine zusätzliche Verbesserung der Kratzbeständigkeit sowie eine Erleichterung der Produktion kann durch die Zugabe von Gleitmitteln oder anderen Verarbeitungshilfsmitteln erreicht werden. Geeignete Zusatzstoffe können beispielsweise auf der Basis von Eruca- oder Ölsäureamiden, Polysiloxanen oder Silikonpolymeren gebildet sein. Entsprechende Gleit- und Verarbeitungshilfsmittel können auch ein Heißkaschieren der Dekorfolie mit dem Träger erleichtern, weil dabei die Oberflächenklebrigkeit deutlich herabgesetzt wird.

Ionomere sind polymere Stoffe, deren Makromoleküle ionische, also salzartige Gruppierungen enthalten. Ionomere werden im Allgemeinen durch Copolymerisation eines funktionalisierten Monomers mit einem olefinischen Monomer und anschließender Salzbildung synthetisiert. Eine wichtige Gruppe sind thermoplastische Copolymere des Ethylens mit carboxylgruppenhaltigen Monomeren wie Acrylsäure, von denen ein Teil als freie Carboxylgruppen vorliegt, der Rest ist mit Metallkationen der ersten und zweiten Gruppe des Periodensystems gebunden, so dass eine gewisse physikalische Quervernetzung erreicht wird. Besonders bevorzugt sind die Carbonsäuregruppen der Makromoleküle durch Zinkionen oder Natriumionen neutralisiert, so dass die Deckschicht gemäß einer bevorzugten Ausgestaltung der Erfindung entsprechend Znlonomer und/oder Na-Ionomer enthält.

Verschiedene Typen von lonomeren werden beispielsweise von DuPont Packaging and Industrial Polymers unter dem Markennamen Surlyn® vertrieben. Insbesondere geeignet ist das lonomer Surlyn® 1706.

Der Träger weist vorzugsweise Naturfasern als nicht-thermoplastische Fasern auf, wobei als Naturfasern insbesondere Hanf, Kenaf, Flachs, Jute, Sisal oder Mischungen der genannten Fasertypen in Betracht kommen.

Als thermoplastisches Polymer in dem Träger sind vorzugsweise thermoplastische Polymerfasern vorgesehen, die dann bei der Herstellung des Trägers leicht mit den nicht-thermoplastischen Fasern, insbesondere Naturfasern gemischt werden können. Hinsichtlich der Kosten sowie der gewünschten mechanischen Eigenschaften sind im besonderen Maße Polyolefinfasern geeignet. Gemäß einer bevorzugten Ausgestaltung bestehen die thermoplastischen Polymerfasern aus Polypropylen, einschließlich Polypropoylen-Copolymer.

Der Anteil der nicht-thermoplastischen Fasern in dem Träger liegt vorzugsweise zwischen 30 Gew.-% und 70 Gew.-%, besonders bevorzugt zwischen 40 Gew.-% und 60 Gew.-%. Entsprechend liegt der Anteil der thermoplastischen Polymerfasern vorzugsweise zwischen 30 Gew.-% und 70 Gew.-%, besonders bevorzugt zwischen 40 Gew.-% und 60 Gew.-%.

Wenn der Träger also als Fasermatte mit einem Gemisch aus thermoplastischen Fasern und nicht-thermoplastischen Fasern bereitgestellt wird, kann der Träger nicht nur leicht hergestellt, sondern auch zunächst leicht verarbeitet und geformt werden. Durch das Aufschmelzen der thermoplastischen Fasern bei einem Kaschieren mit der Dekorfolie und/oder einem Umformen zu dem Formpressteil wird eine einheitliche und tragfähige Polymermatrix gebildet, welche dann durch die nicht-thermoplastischen Fasern verstärkt ist.

Die Dekorfolie ist im Rahmen der Erfindung üblicherweise mehrschichtig gebildet und vorzugsweise mehrschichtig coextrudiert. Insbesondere kann vorgesehen sein, dass die Dekorfolie zumindest dreischichtig und besonders bevorzugt genau dreischichtig coextrudiert ist und an der ersten Seite eine Verbindungsschicht auf der Basis von Polyolefin und zwischen der Verbindungsschicht sowie der Deckschicht eine Haftvermittlerschicht aufweist.

Die Verbindungsschicht ist vorzugsweise an das thermoplastische Polymer des Trägers angepasst. Wenn beispielsweise der Träger Fasern aus Polypropylen aufweist, ist auch die Verbindungsschicht aus Polypropylen, insbesondere Polypropylen-Copolymer gebildet. Als Polypropylen-Copolymer kommen sowohl Random-Copolymere als auch Block-Copolymere in Betracht.

Die Dicke der Verbindungsschicht kann beispielsweise zwischen 10 µm und 300 µm, vorzugsweise zwischen 50 µm und 250 µm liegen.

Das Material der Haftvermittlerschicht ist in Abhängigkeit der Deckschicht und der Verbindungsschicht auszuwählen. Wenn die Verbindungsschicht aus Polypropylen gebildet ist oder Polypropylen enthält, kann für die Haftvermittlerschicht beispielsweise maleinsäureanhydrid-gepropftes Polypropylen vorgesehen sein.

Die Dicke der Haftvermittlerschicht liegt üblicherweise zwischen 3 µm und 20 µm, beispielsweise bei etwa 10 µm.

In einer Schicht oder mehreren Schichten der Dekorfolie können auch Additive vorgesehen sein, wobei insbesondere zumindest ein Additiv ausgewählt aus der Gruppe Mattierungsmittel, Füllstoffe, Gleitmittel, UV-Stabilisatoren und Pigmente in Betracht kommt. Neben Gleitmitteln können gegebenenfalls auch andere Verarbeitungshilfsmittel vorgesehen sein. Wie bereits zuvor erläutert, können Gleitmittel die Kratzbeständigkeit der Dekorfolie verbessern und die Verarbeitung erleichtern.

Im Rahmen der Erfindung ist vorzugsweise vorgesehen, dass die Deckschicht abgesehen von Additiven ausschließlich aus einem lonomer oder einem Gemisch von zumindest zwei lonomeren besteht. Der Anteil der Additive beträgt typischerweise weniger als 30 Gew.-%.

Die Dekorfolie kann beispielsweise eine Gesamtdicke zwischen 70 µm und 400 µm aufweisen.

Gegenstand der Erfindung sind auch ein aus dem beschriebenen Verbundmaterial hergestelltes Formpressteil sowie ein Verfahren zur Herstellung des Formpressteils.

Bei dem Verfahren werden der Träger und die Dekorfolie unter Einwirkung von Druck und Temperatur derart miteinander verbunden und umgeformt, dass die Dekorfolie zumindest teilweise aufschmilzt und dabei ein Teil der nicht-thermoplastischen Fasern bis in die Deckschicht gelangt. Es liegt dabei im Rahmen der Erfindung, zunächst den Träger mit der Dekorfolie zu verbinden, um nachfolgend das Formpressteil mit der gewünschten Kontur zu bilden.

Zumindest bei dem fertigen Formpressteil ergibt sich ein kompakter Schichtaufbau in Dickenrichtung, bei dem die nicht-thermoplastischen Fasern sich über mehrere Schichten erstrecken und eine Verstärkung bilden. Insbesondere wenn bei dem Träger das thermoplastischen Polymer des Verbundmaterials in Form thermoplastischen Fasern bereitgestellt wird, schmelzen diese thermoplastischen Fasern bei der Bildung des Formpressteils auf und verlieren ihre Faserstruktur, um eine weitgehend einheitliche und von den nicht-thermoplastischen Fasern durchsetzte Polymerstruktur zu bilden.

Die Erfindung wird im Folgenden anhand einer lediglich ein Ausführungsbeispiel darstellenden Zeichnung erläutert. Es zeigen:
- Fig. 1: einen Querschnitt durch ein Verbundmaterial zur Herstellung eines Formpressteils,
- Fig. 2: einen Querschnitt durch ein Formpressteil, welches durch die Einwirkung von Druck und Temperatur aus dem Verbundmaterial gemäß der Fig. 1 gebildet ist.

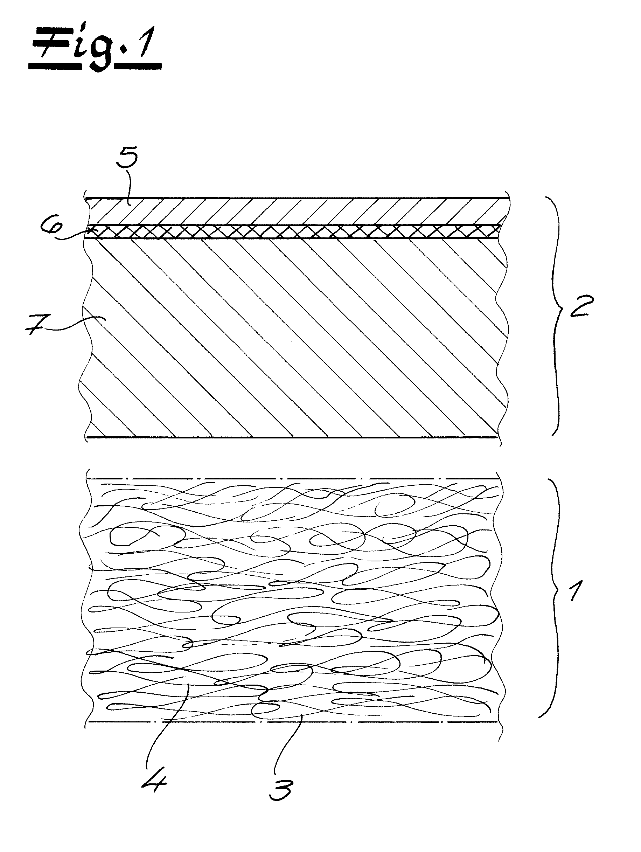

Die Fig. 1 zeigt ein Verbundmaterial für die Herstellung eines Formpressteils, welches einen Träger 1 und auf dem Träger 1 eine Dekorfolie 2 aufweist.

Der Träger 1 ist aus einem Fasergemisch gebildet und enthält nicht-thermoplastische Fasern in Form von Naturfasern 3 und thermoplastische Fasern 4 auf der Basis von Polypropylen. Die auf dem Träger 1 angeordnete Dekorfolie 2 grenzt mit einer ersten Seite an den Träger 1 an, wobei eine zweite Seite der Dekorfolie 2 eine Oberfläche des Verbundmaterials bildet.

Als Naturfasern 3 können Hanf, Kenaf, Flachs, Jute, Sisal oder eine Mischung der genannten Fasertypen vorgesehen sein. Der Anteil der Naturfasern 3 und der thermoplastischen Fasern 4 in dem Träger 1 liegt jeweils zwischen 40 Gew.-% und 60 Gew.-%.

Die Dekorfolie 2 ist in dem Ausführungsbeispiel dreischichtig coextrudiert, wobei die Oberfläche des Verbundmaterials von einer Deckschicht 5 gebildet ist, welche über eine Haftvermittlerschicht 6 an eine Verbindungsschicht 7 anschließt.

Die Deckschicht 5 besteht bis auf einen Anteil an Additiven von typischerweise maximal 30 Gew.-% aus Ionomer, insbesondere Zn-Ionomer und/oder Na-Ionomer. Geeignet ist insbesondere Surlyn® 1706 des Herstellung DuPont.

Die Dicke der Deckschicht 5 liegt üblicherweise zwischen 10 µm und 100 µm, vorzugsweise zwischen 20 µm und 80 µm, in dem Ausführungsbeispiel bei 30 µm.

Die Haftvermittlerschicht 6 weist eine Dicke von 10 µm und ist aus maleinsäureanhydrid-gepropftem Polypropylen (PP-MAH) gebildet und enthält ebenfalls Farbpigmente und Additive.

Die Verbindungsschicht weist in dem Ausführungsbeispiel eine Dicke von 200 µm auf und besteht bis auf auch hier vorgesehene Additive aus Polypropylen-Copolymer, insbesondere Polypropylen-Random-Copolymer.

Die Dicke der Dekorfolie 2 beträgt damit in dem Ausführungsbeispiel 240 µm.

Der Träger 1 ist in der Fig. 1 nicht maßstabsgetreu dargestellt und kann im Vergleich zu der Dekorfolie 2 eine erheblich größere Dicke aufweisen, um ein ausreichend stabiles und widerstandsfähiges Formpressteil bilden zu können.

In der Fig. 1 sind der Träger und die Dekorfolie 2 voneinander getrennt dargestellt. Auch wenn der Träger 1 und die Dekorfolie 2 noch nicht miteinander verbunden sind, bilden diese im Sinne der vorliegenden Erfindung das beschriebene Verbundmaterial. Alternativ können der Träger 1 und die Dekorfolie 2 aber auch vor der Umformung zur Bildung des Formpressteils zu einer Materialbahn kaschiert werden, wobei dann bereits eine Verbindung bzw. ein Verschmelzen des Trägers 1 mit der Dekorfolie 2 erfolgen kann.

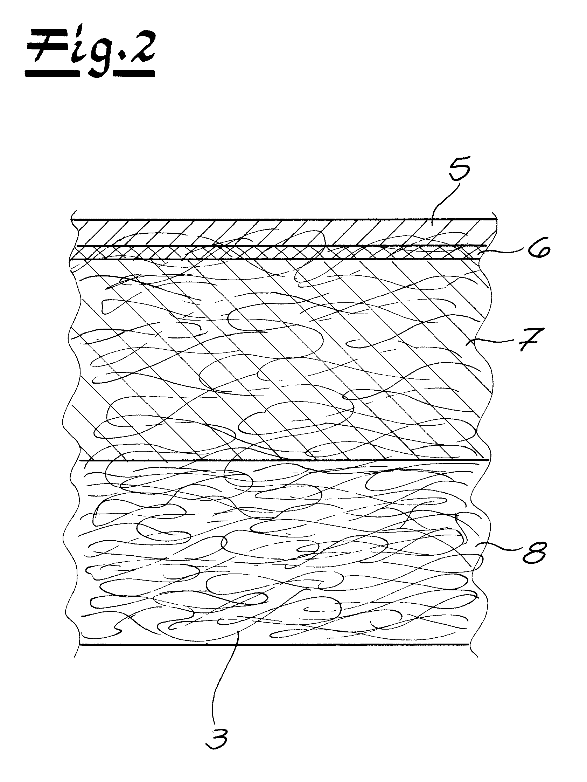

Die Fig. 2 zeigt in einer schematischen Darstellung ein aus dem Verbundmaterial gemäß der Fig. 1 gebildetes Formpressteil. Durch die Einwirkung von Druck und Temperatur sind die thermoplastischen Fasern 4 aufgeschmolzen und bilden gegenüberliegend der Deckschicht 5 eine folienartige, durchgehende Polymermatrix 8, welche in die Verbindungsschicht 7 übergeht und auch - zumindest in einem gewissen Maße - mit der Verbindungsschicht 7 verschmolzen sein kann.

Zusätzlich befinden sich die Naturfasern 3 nicht nur in der Polymermatrix 8 und der Verbindungsschicht 7, sondern erstrecken sich auch durch die Haftvermittlerschicht 6 bis in die Deckschicht 5.

Das lonomer der Deckschicht verleiht dem Formpressteil eine sehr hohe Kratzfestigkeit. Überraschenderweise ist die Kratzfestigkeit auch nicht durch die in die Deckschicht 5 eingebundenen Naturfasern 3 beeinträchtigt, weil das lonomer gegenüber den Naturfasern eine sehr gute Haftung aufweist.

## Patentansprüche

1. Verbundmaterial für die Herstellung vom Formpressteilen mit einem nicht-thermoplastische Fasern (4) und thermoplastisches Polymer enthaltenden Träger (1) und mit einer Dekorfolie (2), die mit einer ersten Seite auf dem Träger (1) angeordnet ist und mit einer zweiten Seite eine Oberfläche des Verbundmaterials bildet, **dadurch gekennzeichnet, dass** die Dekorfolie (2) an der zweiten Seite eine Deckschicht (5) mit lonomer als Hauptbestandteil aufweist.

2. Verbundmaterial nach Anspruch 1, **dadurch gekennzeichnet, dass** der Träger (1) aus Naturfasern (3) und thermoplastischen Polymerfasern, insbesondere Polyolefinfasern gebildet ist.

3. Verbundmaterial nach Anspruch 2, **dadurch gekennzeichnet, dass** als Naturfasern (3) zumindest ein Fasertyp ausgewählt aus der Gruppe Hanf, Kenaf, Flachs, Jute und Sisal vorgesehen ist, wobei der Anteil der Naturfasern (3) in dem Träger (1) zwischen 30 Gew.-% und 70 Gew.-%, vorzugsweise zwischen 40 Gew.-% und 60 Gew.-% beträgt.

4. Verbundmaterial nach Anspruch 2 oder 3, **dadurch gekennzeichnet, dass** die thermoplastischen Polymerfasern aus Polypropylen gebildet sind, wobei der Anteil der thermoplastischen Polymerfasern in dem Träger (1) zwischen 30 Gew-% und 70 Gew.-%, vorzugsweise zwischen 40 Gew.-% und 60 Gew.-% beträgt.

5. Verbundmaterial nach einem der Ansprüche 1 bis 4, **dadurch gekennzeichnet, dass** die Dekorfolie (2) mehrschichtig gebildet ist.

6. Verbundmaterial nach Anspruch 5, **dadurch gekennzeichnet, dass** die Dekorfolie (2) zumindest dreischichtig coextrudiert ist, an der ersten Seite eine Verbindungsschicht (7) auf der Basis von Polyolefin und zwischen der Verbindungsschicht (7) sowie der Deckschicht (5) eine Haftvermittlerschicht (6) aufweist, wobei die Deckschicht (5) eine Schichtdicke zwischen 10 µm und 100 µm aufweist.

7. Verbundmaterial nach einem der Ansprüche 1 bis 6, **dadurch gekennzeichnet, dass** die Deckschicht (5) Additive, insbesondere zumindest ein Additiv aus der Gruppe Mattierungsmittel, Füllstoffe, Gleitmittel, UV-Stabilisatoren und Pigmente enthält.

8. Verbundmaterial nach Anspruch 7, **dadurch gekennzeichnet, dass** die Deckschicht (5) aus lonomer und Rest Additive besteht, wobei der Anteil der Additive weniger als 30 Gew.-% beträgt.

9. Verbundmaterial nach einem der Ansprüche 1 bis 8, **dadurch gekennzeichnet, dass** die Dekorfolie (2) eine Gesamtdicke zwischen 70 µm und 400 µm aufweist.

10. Verbundmaterial nach einem der Ansprüche 1 bis 9, **dadurch gekennzeichnet, dass** die Deckschicht (5) Zn-Ionomer und/oder Na-Ionomer enthält.

11. Formpressteil, hergestellt auf einem Verbundmaterial nach einem der Ansprüche 1 bis 10, **dadurch gekennzeichnet, dass** die Naturfasern (3) sich zu einem Teil bis in die Deckschicht (5) hinein erstrecken und so in die Deckschicht (5) eingebunden sind.

12. Verfahren zur Herstellung eines Formpressteils aus einem Verbundmaterial nach einem der Ansprüche 1 bis 10, wobei der Träger (1) und die Dekorfolie (2) unter Einwirkung von Druck und Temperatur derart miteinander verbunden und umgeformt werden, dass die Dekorfolie (2) teilweise aufschmilzt und dabei ein Teil der nicht-thermoplastischen Fasern bis in die Deckschicht (5) gelangt.
